# FASCICULE DE BREVET EUROPEEN

(11) **EP 2 580 506 B1**
(45) Date de publication et mention de la délivrance du brevet: **29.07.2015**
(21) Numéro de dépôt: 10790879.0
(22) Date de dépôt: 02.09.2010
(51) Int. Cl.: F16K 21/10

(54) **DISPOSITIF DE FERMETURE AUTOMATIQUE TEMPORISÉE**
ZEITVERZÖGERTE AUTOMATISCHE ABSCHALTVORRICHTUNG
TIME-DELAYED AUTOMATIC SHUT-OFF DEVICE

(30) Priorité: 10.06.2010 TN 10268
(43) Date de publication de la demande: 17.04.2013
(73) Titulaire: Societe De Production D'articles En Laiton "Sopal", 3003 Sfax (TN)
(72) Inventeur: REGAYEG, Mohamed, 3003 Sfax (TN)
(74) Mandataire: Tischner, Oliver
(86) Numéro de dépôt international: PCT/TN2010/000003
(87) Numéro de publication internationale: WO 2011/155907

(56) Documents cités:
- US-A- 4 884 781
- US-A1- 2006 208 209

## Description

La présente invention concerne un dispositif pour fermeture automatique temporisée, destiné à être adapter sur un corps de robinet pourvu d'une entrée d'eau, par exemple, axiale et d'une sortie par exemple, radiale. Le piston de ce dispositif est susceptible d'ouvrir et de fermer un obturateur, celui-ci commandant l'écoulement de l'eau sous l'effet d'un bouton de commande à ressort de rappel.

Le présent dispositif est destiné à équiper des robinets pour appareils sanitaires tels que Chasse, lavabo, douche, urinoirs etc....

De tels robinets sont affectés aux particuliers, aux collectivités et aux lieux publics, ils assurent une économie d'eau car ils ne permettent d'obtenir de l'eau que pendant une durée prédéterminée, ce qui évite le gaspillage.

Dans l'état de la technique On connaît ce genre de robinet qui comprend, d'une part, un corps de forme généralement cylindrique dans lequel débouche le (ou les) arrivée d'eau et une tubulure de sortie d'eau, et, d'autre part, une cartouche qui est insérée dans ce corps. Cette cartouche, amovible et interchangeable monobloc insérée dans le corps, comprend, en particulier, un bouton commandant la sortie d'eau pendant un temps déterminé. Ainsi on obtient l'ouverture en exerçant une poussée sur un bouton de commande et la fermeture se produit automatiquement au bout d'un certain laps de temps après qu'on ait relâché l'appui sur le bouton. Un tel robinet est décrit par exemple dans le brevet français n" FR1136598, ou le 6375880 (A) et EP-264638-A. qui utilisent la même eau pour la temporisation.

On connait aussi le robinet du document US2006/0208209 et la soupape du document US4884781.

Dans l'état de la technique, on connait aussi des robinets dont le clapet est porté par un piston susceptible de se déplacer dans une chambre communiquant avec l'arrivée d'eau, par l'entremise d'un orifice au centre calibré.

Lors de l'ouverture du robinet, on repousse le piston dans la chambre en chassant le volume d'eau qu'elle contient, ce qui a pour effet de soulever le clapet. Dés le soulèvement du clapet, l'eau pénètre dans la chambre de temporisation par l'entremise de l'orifice calibré précité et repousse progressivement le clapet contre son siège. On comprend dès lors que le temps de temporisation dépend essentiellement du diamètre de l'orifice calibré. Pour éviter l'obstruction de l'orifice calibré par dépôts quelconques, celui -ci est traversé par une tige pouvant se déplacer axialement par rapport audit orifice. La conception des robinets actuels est telle qu'à chaque manoeuvre de ceux-ci la tige précitée effectue un mouvement de va et vient à travers l'orifice calibré et les frottements qui en résultent entrainent une usure qui se traduit par une augmentation du diamètre dudit orifice. De ce fait, l'eau pénètre plus facilement dans la chambre de temporisation et le clapet est repoussé contre son siège plus tôt que désiré.

Ce phénomène est encore amplifié par le fait que tige est généralement métallique alors que le trou calibré est réalisé dans une pièce en matière plastique ou autre le cas du document EP 0333526(A1)

Dans l'état de la technique, on connait aussi les cartouches amovibles et interchangeables qui sont insérés dans un corps de robinet. Lors de l'ouverture du robinet, on repousse le piston dans la chambre en chassant le volume d'eau qu'elle contient, ce qui a pour effet de soulever le clapet. Dès le soulèvement du clapet, l'eau pénètre dans la chambre de temporisation par l'entremise d'une fente sur la paroi intérieure et repousse progressivement le clapet contre son siège. On comprend dès lors que le temps de temporisation dépend essentiellement de la dimension de la fente. Pour éviter l'obstruction de cette fente par des dépôts quelconques, un joint d'étanchéité est placé sur le corps de la cartouche pour nettoyer cette fente pendant le déplacement axiale d'ouverture et de fermeture. Cette solution présente l'inconvénient que le joint n'est pas efficace contre le dépôt de calcaire, alors le temps de fermeture devient plus long.

Ces robinets connus présentent pour la plupart de nombreux inconvénients, comme le fait que leur conception est peu rationnelle, ce qui oblige à utiliser un grand nombre d'organes mécaniques difficiles à réaliser, et donc coûteux, et conduit finalement à un robinet temporisé dont la fabrication est onéreuse et dont la fiabilité n'est pas toujours aussi satisfaisante qu'on le souhaiterait.

Notre invention propose une solution aux problèmes et inconvénients qui viennent d'être exposés. D'une façon générale, l'invention propose un dispositif de fermeture automatique temporisée dont le fonctionnement est d'une grande fiabilité, dont les risques de dysfonctionnement sont quasi inexistants.

A cet effet, on propose, dans l'invention, une cartouche hydraulique totalement hermétique pour temporiser une opération de fermeture d'une vanne qui vient d'être ouverte. La cartouche hydraulique utilise un fluide différent de l'eau circulant à travers le robinet; le fluide de la cartouche est amené d'une première zone vers une deuxième zone lors d'une opération d'ouverture du robinet. Ledit fluide est ensuite reconduit, en réponse à une pression exercée par un ressort pour ramener le robinet dans une position fermée, vers sa première position.

Avantageusement, le fluide emprunte un chemin différent, pour retrouver sa première position, de celui pris lors de l'opération d'ouverture du robinet.

L'invention concerne donc essentiellement un dispositif de fermeture automatique temporisée d'un robinet, comportant notamment :
*Un obturateur du passage d'eau entre une entrée et une sortie du robinet et pour libérer, dans une position ouverte du robinet, ledit passage.
*Un bouton de commande, constitué notamment d'une pièce de manoeuvre et d'une tige solidarisant ledit bouton avec l'obturateur, pour faire passer, dans un mouvement d'ouverture, le robinet de la position fermée à la position ouverte suite à une intervention d'un utilisateur.

Dans un tel robinet, l'organe de commande présente généralement la forme d'un bouton ou d'un levier sur lequel on appuie pour obtenir de l'eau. Après qu'on l'a relâché, l'écoulement s'arrête de lui-même au bout d'un certain temps réglé.
*Un ressort, pour faire passer, en exerçant sur le bouton un mouvement de fermeture opposé au mouvement d'ouverture, le robinet de la position ouverte à la position fermée ; le ressort(16) est monté en compression entre le corps du mécanisme et la face inférieure du bouton de commande.
* une cartouche hydraulique hermétique, traversée par la tige de l'actionneur, ladite cartouche comportant notamment :
   - un second fluide incompressible.
   - un piston centré et solidarisé sur le bouton de commande , présentant une paroi latérale évoluant le long d'une paroi latérale de la cartouche hydraulique lors du mouvement d'ouverture et de mouvement de fermeture , ledit piston comportant au moins un orifice traversant pour permettre , lors du mouvement d'ouverture , le passage du second fluide d'une première zone vers une seconde zone de la cartouche hydraulique ;
   - une soupape glissant sur la tige du piston pour libérer le passage du second fluide dans au moins un des orifices traversant axialement l'épaulement du piston lors du mouvement d'ouverture, et pour bloquer le passage du second fluide dans les orifices traversant le piston lors du mouvement de fermeture.
   - Une membrane ou joint qui peut être ou pas montée sur une bague de maintien désignée sur le schéma ' soupape' ; cette membrane appliquée sur la face supérieure du piston par un ressort empêche le passage du fluide vers la zone supérieure en position repos.
   - au moins un canal de transfert pour assurer le passage du second fluide de la seconde zone vers la première zone lors du mouvement de fermeture.
   - Un élément de régulation qui peut être une vis pointeau pour régler le débit du retour du second fluide vers son logement initial pendant l'état de fermeture.

Description des schémas : ces schémas sont présentés à titre indicatif et non limitatif.

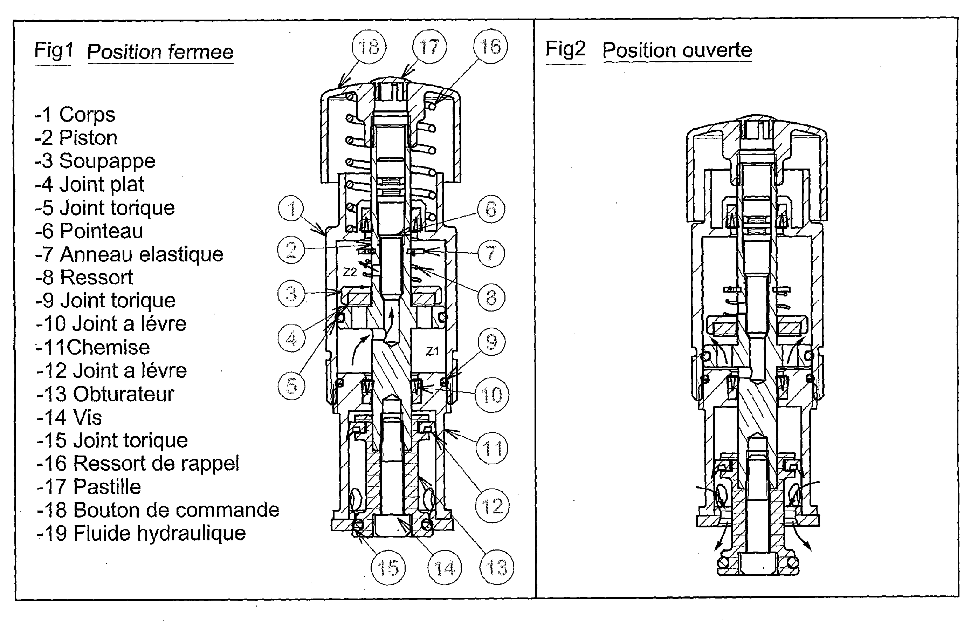

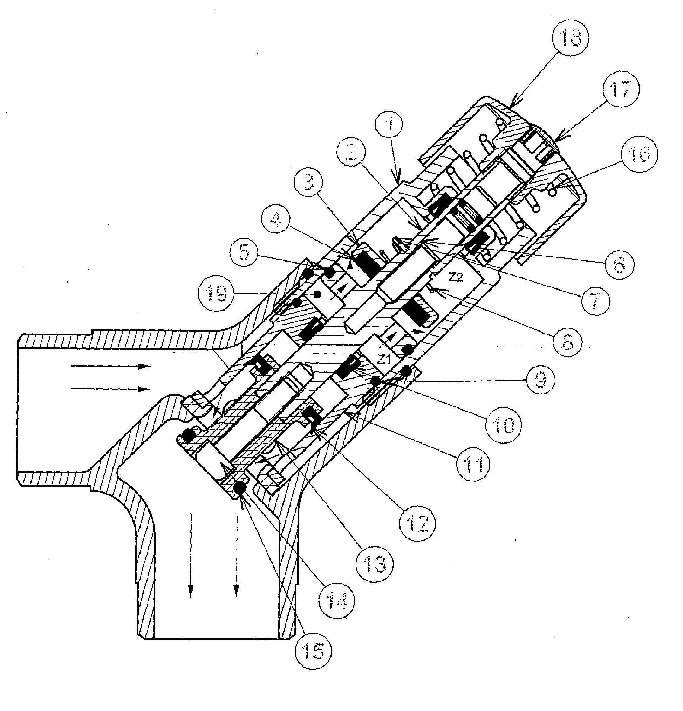

*La figure 1 est une présentation schématique du dispositif en positon fermée.
*La figure 2 est une présentation schématique du dispositif en position ouverte.

## Revendications

1. Un dispositif de fermeture automatique temporisé pour robinet, destiné à être monté dans un corps de robinet qui est pourvu d'une entrée d'eau ou de fluide, par exemple axiale et d'une sortie d'eau ou de fluide, par exemple radiale, le dispositif comprenant:
- une chambre formée de deux zones (Z1, Z2) séparées par un piston (2) où circule un fluide non communicant avec un circuit principal qui est généralement l'eau;
- un obturateur (13) pour bloquer, dans une position fermée du robinet, le passage de l'eau ou autre fluide entre une entrée et une sortie du robinet et pour libérer, dans une position ouverte du robinet, ledit passage;
- une commande, constituée notamment d'un bouton de commande (18) et du piston (2) solidarisant ladite commande avec l'obturateur (13), pour faire passer, dans un mouvement d'ouverture, le robinet de la position fermée à la position ouverte suite à une intervention d'un utilisateur;
- un ressort (16), pour faire passer, en poussant le bouton de commande (18) par un mouvement de fermeture opposé au mouvement d'ouverture le robinet de la position ouverte à la position fermée;
- ladite chambre (Z1, Z2) étant hydrauliquement hermétique et étant traversée par une tige de commande et comportant notamment un second fluide;
- un piston comportant un épaulement percé et un joint d'étanchéité (5) glissant sur la paroi latérale de la chambre hydraulique lors du mouvement d'ouverture et du mouvement de fermeture dudit piston, ledit piston comportant des trous le traversant parallèlement au mouvement de translation du piston, lesdits trous permettant, lors du mouvement d'ouverture du piston, le passage du fluide de la première zone (Z1) vers la deuxième zone (Z2) de la chambre hydraulique;
- un joint plat (4) appliqué sur les trous du piston par le ressort (16) pour libérer le passage du second fluide dans au moins un des trous traversant le piston (2) lors du mouvement d'ouverture, et pour bloquer le passage du second fluide dans les trous traversant le piston lors du mouvement de fermeture, à cet état le seul passage de retour du fluide étant assuré par un orifice au centre du piston dont l'entrée est situé dans la première zone (Z1) et la sortie dans la deuxième zone (Z2);
- ledit passage étant réglé par une vis pointeau (6);
- ledit bouton de commande (18) étant percé d'un trou axial permettant d'accéder à la vis pointeau (6) de réglage.

2. Dispositif selon la revendication 1 **caractérisé en ce que** le retour du fluide hydraulique de la chambre de la premier zone (Z1) vers la deuxième zone (Z2) est assuré par au moins l'orifice au centre du piston (2) dont l'entrée est située sur la partie inférieure de l'épaulement du piston et la sortie sur la partie supérieure du piston et **en ce que** pour calibrer le temps de retour on joue sur le passage présenté par la section entre la face inférieure du pointeau et le trou du centre du piston.

3. Dispositif selon la revendication 1 **caractérisé en ce qu'**un joint plat est appliqué sur les trous de l'épaulement du piston par un ressort monté en compression entre une buté sur le piston et la face supérieure du joint ou le porte joint.

4. Dispositif selon une des revendications précédentes **caractérisé en ce que** la chambre ou circule le fluide hydraulique est étanche avec le piston par des joints et avec une chemise porte obturateur par au moins un joint d'étanchéité.

5. Dispositif selon une des revendications précédentes **caractérisé en ce que** le piston comporte sur la génératrice de son épaulement un joint d'étanchéité évitant le passage latéral du second fluide emprisonnée dans la chambre.

## Patentansprüche

1. Zeitverzögerte automatische Abschaltvorrichtung für einen Hahn, die zur Montage in einen Hahnkörper bestimmt ist, der mit einem beispielsweise axialen Wasser- oder Fluideingang und einem beispielsweise radialen Wasser- oder Fluidausgang ausgestattet ist, wobei die Vorrichtung umfasst:
- eine aus zwei von einem Kolben (2) getrennten Zonen (Z1, Z2) gebildete Kammer, wo ein nicht mit einem Hauptkreis, der im Allgemeinen Wasser ist, kommunizierendes Fluid zirkuliert,
- einen Verschluss (13), um in einer geschlossenen Stellung des Hahns den Durchgang von Wasser oder eines anderen Fluids zwischen einem Eingang und einem Ausgang des Hahns zu blockieren und um ein einer geöffneten Stellung des Hahns den Durchgang zu erlauben,
- eine Steuerung, die insbesondere von einem Steuerknopf (18) und dem Kolben (2) gebildet ist, der die Steuerung mit dem Verschluss (13) verbindet, um bei einer Öffnungsbewegung infolge eines Eingriffs eines Benutzers den Hahn aus der geschlossenen Stellung in die geöffnete Stellung zu bewegen,
- eine Feder (16), um den Hahn durch Drücken des Steuerknopfs (18) mit einer der Öffnungsbewegung entgegengesetzten Verschlussbewegung aus der geöffneten Stellung in die geschlossene Stellung zu bewegen,
- wobei die Kammer (Z1, Z2) hydraulisch hermetisch ist und von einer Steuerstange durchquert wird und insbesondere ein zweites Fluid aufweist,
- einen Kolben, der einen durchbrochenen Absatz und eine Dichtung (5) aufweist, die bei der Öffnungsbewegung und der Verschlussbewegung des Kolbens auf der Seitenwand der hydraulischen Kammer gleitet, wobei der Kolben ihn parallel zur Verschiebebewegung des Kolbens parallel durchquerende Löcher aufweist, wobei die Löcher bei der Öffnungsbewegung des Kolbens den Durchgang des Fluids aus der ersten Zone (Z1) in die zweite Zone (Z2) der hydraulischen Kammer erlauben,
- eine flache Dichtung (4), die von der Feder (16) auf die Löcher des Kolbens gedrückt wird, um den Durchgang des zweiten Fluids in mindestens einem der den Kolben (2) durchquerenden Löcher bei der Öffnungsbewegung freizugeben und um den Durchgang des zweiten Fluids in den den Kolben durchquerenden Löchern bei der Verschlussbewegung zu blockieren, wobei in diesem Zustand nur der rückwärtige Durchgang des Fluids durch eine Öffnung im Zentrum des Kolbens gesichert ist, deren Eingang sich in der ersten Zone (Z1) und der Ausgang in der zweiten Zone (Z2) befindet,
- wobei dieser Durchgang von einer Steuerschraube (6) reguliert wird,
- wobei der Steuerknopf (18) von einem axialen Loch durchbrochen ist, das den Zugriff auf die regulierende Steuerschraube (6) erlaubt.

2. Vorrichtung nach Anspruch 1, **dadurch gekennzeichnet, dass** der Rückfluss des Hydraulikfluids aus der Kammer der ersten Zone (Z1) in die zweite Zone (Z2) von mindestens der Öffnung im Zentrum des Kolbens (2) gesichert wird, deren Eingang sich im unteren Teil des Absatzes des Kolbens und der Ausgang im oberen Teil des Kolbens befindet und dass zur Kalibrierung der Rückflusszeit der Durchgang, der sich anhand des Querschnitts zwischen der Innenseite der Steuerschraube und dem Loch des Zentrums des Kolbens darstellt, verändert wird.

3. Vorrichtung nach Anspruch 1, **dadurch gekennzeichnet, dass** eine flache Dichtung von einer Feder, die in Kompression zwischen einem Anschlag auf dem Kolben und der oberen Fläche der Dichtung oder des Dichtungsträgers montiert ist, auf die Löcher des Absatzes des Kolbens gedrückt wird.

4. Vorrichtung nach einem der vorangehenden Ansprüche, **dadurch gekennzeichnet, dass** die Kammer, wo das Hydraulikfluid zirkuliert, mit dem Kolben durch Dichtungen und mit einem Verschlussträgermantel durch mindestens eine Dichtung abgedichtet ist.

5. Vorrichtung nach einem der vorangehenden Ansprüche, **dadurch gekennzeichnet, dass** der Kolben auf der Mantellinie seines Absatzes eine Dichtung aufweist, die den seitlichen Durchgang des zweiten, in der Kammer eingeschlossenen Fluids verhindert.

## Claims

1. A time-delayed automatic shut-off device for a tap, designed to be mounted in a tap body that is provided with a water or fluid inlet, for example axial, and a water or fluid outlet, for example radial, the device comprising:
- a chamber formed by two zones (Z1, Z2) separated by a piston (2) where a fluid flows not communicating with a main circuit that is generally water;
- a closing member (13) to block, in a closed position of the tap, the passage of the water or other fluid between an inlet and outlet of the tap and to release said passage in an open position of the tap;
- a command, in particular made up of a control button (18) and the piston (2) securing said command with the closing member (13), to cause the tap to go, in an opening movement, from the closed position to the opening position following an intervention by a user;
- a spring (16) to cause, by pushing the control button (18) through a closing movement opposite the opening movement, the tap to go from the open position to the closed position;
- said chamber (Z1, Z2) being hydraulically hermetic and being crossed through by a control rod and in particular including a second fluid;
- a piston including a pierced shoulder and a sealing gasket (5) sliding on the side wall of the hydraulic chamber during the opening movement and the closing movement of said piston, said piston including holes crossing through it parallel to the translational movement of the piston, said holes allowing, during the opening movement of the piston, the passage of the fluid from the first zone (Z1) to the second zone (Z2) of the hydraulic chamber;
- a flat seal (4) applied on the holes of the piston by the spring (16) to free the passage of the second fluid in at least one of the holes crossing through the piston (2) during the opening movement, and to block the passage of the second fluid in the holes crossing through the piston during the closing movement, in that state only the return passage of the fluid being provided by an orifice at the center of the piston whereof the inlet is situated in the first zone (Z1) and the outlet in the second zone (Z2);
- said passage being adjusted by a cone-point set screw (6);
- said control button (18) being pierced by an axial hole making it possible to access the cone-point set screw (6) for adjustment.

2. The device according to claim 1, **characterized in that** the return of the hydraulic fluid from the chamber of the first zone (Z1) toward the second zone (Z2) is provided by at least one orifice at the center of the piston (2) whereof the inlet is situated on the lower part of the shoulder of the piston and the outlet on the upper part of the piston, and **in that** in order to calibrate the return time, one acts on the passage exhibited by the section between the lower face of the needle and the hole of the center of the piston.

3. The device according to claim 1, **characterized in that** a flat seal is applied on the holes of the shoulder of the piston by a spring mounted in compression between a stop on the piston and the upper face of the seal or seal-carrier.

4. The device according to one of the preceding claims, **characterized in that** the chamber where the hydraulic fluid flows is made tight with the piston via seals and with a closing member-carrying sleeve by at least one sealing gasket.

5. The device according to one of the preceding claims, **characterized in that** the piston includes, on the generatrix of its shoulder, a sealing gasket preventing the lateral passage of the second fluid captured in the chamber.
